Europäisches Patentamt

European Patent Office

Office européen des brevets

(19)

(11) **EP 1 511 192 A1**

(12) **EUROPEAN PATENT APPLICATION**
published in accordance with Art. 158(3) EPC

(43) Date of publication:
02.03.2005 Bulletin 2005/09

(51) Int Cl.⁷: **H04B 7/26**

(21) Application number: 03797520.8

(22) Date of filing: 14.08.2003

(86) International application number:
**PCT/JP2003/010332**

(87) International publication number:
**WO 2004/028038 (01.04.2004 Gazette 2004/14)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.09.2002 JP 2002274746**

(71) Applicant: **MATSUSHITA ELECTRIC INDUSTRIAL CO., LTD.**
**Kadoma-shi, Osaka 571-8501 (JP)**

(72) Inventor: **IOCHI, Hitoshi**
**Yokohama-shi, Kanagawa 235-0023 (JP)**

(74) Representative: **Grünecker, Kinkeldey, Stockmair & Schwanhäusser Anwaltssozietät**
**Maximilianstrasse 58**
**80538 München (DE)**

(54) **BASE STATION DEVICE AND PACKET TRANSMISSION POWER CONTROL METHOD**

(57)   Transmission destination determiner 301 selects communication terminals to be candidates to transmit a packet to from a packet transmission control signal, and determines a transmission destination apparatus based on CQI signals from the communication terminal apparatuses selected. Packet channel quality estimator estimates the quality of a received packet at the transmission destination apparatus based on the CQI signal, and, based on the estimation result, calculates a request packet quality for achieving a target packet quality upon retransmission based on the estimation result. Transmission power determiner 304, when receiving an ACK signal from the transmission destination apparatus, sets transmission power at a predetermined level, and, when receiving a NACK signal, determines transmission power to fulfill the request packet quality. By this means, the base station apparatus is able to estimate receiving quality of a packet at the communication terminal apparatus without having the communication terminal apparatus transmit packet quality information and determine transmission power required for retransmission based on the receiving quality of the packet.

FIG.3

**Description**

Technical Field

The present invention relates to a base station apparatus and a packet transmission power control method for use in a wireless communication system that performs high speed downlink packet transmission.

Background Art

In the field of wireless communications, high speed downlinkpacketcommunicationschemesarebeing developed whereby a plurality of communication terminal apparatuses share a high speed and high volume downlink channel and a base station apparatus transmits packets to the communicationterminalapparatuses. Highspeeddownlink packet transmission schemes employ scheduling techniques and adaptive modulation techniques for improved transmission rates.

A scheduling technique refers to a technique of having a base station apparatus set the communication terminal apparatus to be the transmission destination (hereinafter "transmission destination apparatus") of high speed downlink packets and assign the packets to transmit to the transmission destination apparatus, on a per time slot basis.

Moreover, an adaptive modulation technique refers to a technique of adaptively determining modulation schemes or error correction coding schemes (MCS: Modulation and Coding Scheme) according to the propagation path condition of the communication terminal apparatus to transmit packets to.

Moreover, a wireless communication system that performs high speed packet transmission employs ARQ (Automatic Repeat Request), especially H-ARQ (Hybrid-Automatic Repeat Request), to prevent a lack of the data with errors.

ARQ refers to a technique of having the transmitter apparatus automatically perform the processing for retransmitting the data unit (e.g., frame) in which an error is detected in the receiver apparatus, and H-ARQ refers to a technique of having the transmitter apparatus select specific bits and transmit them to the receiver apparatus upon retransmission and combining the retransmission signal and an earlier received signal in the receiver apparatus.

An overview of the operation of a base station apparatus and a communication terminal apparatus that perform high speed packet transmission will be given below.

The base station apparatus predicts channel quality based on the downlink channel condition report value transmitted from each communication terminal apparatus, and, determining the communication terminal apparatus of the highest channel quality as the transmission destination apparatus, assigns the packets to this transmission destination apparatus in each time slot. Then, the base station apparatus performs the error correction coding and modulation of the packets by the scheme determined through scheduling and transmits the result with information that represents the scheduling result to the transmission destination apparatus.

Based on the received information that represents the scheduling result, each communication terminal apparatus performs demodulation and CRC detection in the time slot in which the packet for the terminal is assigned, and, when having correctly demodulated the packet data, transmits an ACK signal indicative thereof, and, when having failed to correctly demodulate the packet data, transmits a NACK signal indicative thereof, to the base station apparatus.

The base station apparatus, upon receiving the ACK signal, transmits new data, and, upon transmitting the NACK signal, retransmits the same data.

Thus, according to the high speed downlink packet transmission scheme, all the communication terminal apparatuses in a sector share one channel and transmit packets efficiently, thereby enabling effective use of code resources.

Now, there is a prior art technique called ML-ARQ (Multi-Level Automatic Repeat Request) for improving throughput upon retransmission in H-ARQ and for reducing transmission power in the base station apparatus, which is disclosed, for instance, in following non-patent document 1.

In this technique, when an error is detected in a received packet, the communication terminal apparatus reports packet quality information that represents how good or poor the quality of the received packet is (i.e., whether there are few errors or many errors) to the base station apparatus in an attachment to a NACK signal, and, based on this packet quality information, the base station apparatus performs retransmission at adequate transmission power. Incidentally, the above document does not presuppose adaptive modulation.

Still, when ML-ARQ is applied to a system employing adaptive modulation, the communication terminal apparatus needs to perform value multiplexing of ACK/NACK signals and packet quality information and transmit the result to the base station apparatus. To perform transmission at competent error rates as in the case of ACK/NACK digital values, transmission power needs to be increased, which results in the problem of decreased frequency use rate in the uplink channel.

Summary of the Invention

Where ML-ARQ is applied to a system employing adaptive modulation, it is an object of the present invention to provide a base station apparatus and a packet transmission power control method that enable the base station apparatus to estimate packet receiving quality at the communication terminal apparatus and control packet transmission power without having the communication terminal apparatus transmit receiving packet quality information.

This obj ect can be achieved by having the base station apparatus estimate packet receiving quality at the communication terminal apparatus based on the downlink channel condition report value corresponding to the time when the communication terminal apparatus received the packet, and determine the transmission power necessary for retransmission.

Brief Description of Drawings

FIG.1 is a block diagram showing the configuration of a base station apparatus according to Embodiment 1 of the present invention;

FIG.2 is a block diagram showing the configuration of a communication terminal apparatus that performs radio communications with the base station apparatus according to Embodiment 1 of the present invention;

FIG.3 is a block diagram showing the internal configuration of a scheduler in the base station apparatus according to Embodiment 1 of the present invention;

FIG.4 is a sequence diagram showing communication process between the base station apparatus and the communication terminal apparatus according to Embodiment 1 of the present invention;

FIG.5 is a diagram showing a specific example of operation of the base station apparatus and communication terminal apparatus according to Embodiment 1;

FIG.6 is a block diagram showing the internal configuration of a scheduler in a base station apparatus according to Embodiment 2 of the present invention; and

FIG.7 is a block diagram showing the internal configuration of a scheduler in a base station apparatus according to Embodiment 3 of the present invention.

Best Mode for Carrying Out the Invention

Embodiments of the present invention will be described in detail below with reference to the accompanying drawings.

In the following descriptions, HSDPA (High Speed Downlink Packet Access) will be used as an example of a high speed downlink packet transmission scheme. In HSDPA, a number of channels are used, including the HS-PDSCH (High Speed-Physical Downlink Shared Channel), the HS-SCCH (Shared Control Channel of HS-PDSCH), and the A-DPCH (Associated-Dedicated Physical Channel).

The HS-PDSCH refers to a downlink shared channel for use for transmission of packets. The HS-SCCH refers to a downlink shared channel for use for transmission of information relating to resource allocation (TFRI: Transport-Format and Resource related Information) and information relating to H-ARQ control.

The A-DPCH refers to an uplink and downlink associated dedicated channel, and the channel configuration and handover control thereof do not differ from those of the DPCH.

The A-DPCH transmits pilot signals and TPC commands, and, in the uplink, transmits ACK/NACK signals and CQI (Channel Quality Indicator) signals in the uplink.

Incidentally, a CQI signal refers to a signal representing a packet data modulation scheme and a coding rate that can be demodulated at the communication terminal apparatus and serves as a report value for reporting the downlink channel condition.

(Embodiment 1)

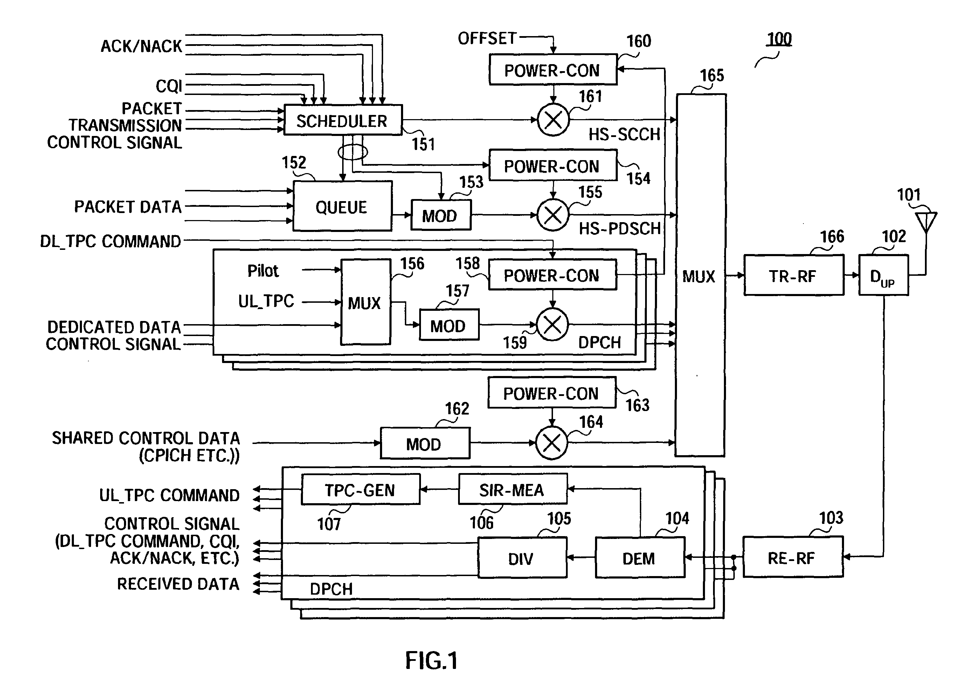

FIG.1 is a block diagram showing the configuration of a base station apparatus according to Embodiment 1 of the present invention. Now, the function of each component in base station apparatus 100 of FIG.1 will be explained below.

Duplexer 102 outputs a signal received by antenna 101 to RF receiver (RE-RF) 103. In addition, duplexer 102 transmits a signal output from RF transmitter (TR-RF) 166 by radio from antenna 101.

RF receiver 103 converts the received signal of radio frequency output from duplexer 102 into a baseband digital signal, and outputs the result to demodulator (DEM) 104.

Demodulator 104, provided in the same number as the communication terminal apparatuses engaged in wireless communication, performs demodulation processing upon the received baseband signal including despreading, RAKE combining, and error correction decoding, and outputs the result to divider (DIV) 105.

Divider 105 divides the output signal from demodulator 104 into the data and the control signal. The control signal separated in divider 105 includes a DL (Down Link)-TPC command, CQI signal, ACK/NACK signal, and so on. The CQI signal and the ACK/NACK signal are output to scheduler 151. The DL-TPC command is output to transmission power controller (POWER-CON) 158.

SIR measurer (SIR-MEA) 106, provided in the same number as the communication terminal apparatuses engaged in wireless communication, measures the received SIR of the uplink channel from the desired signal level and the interference signal level measured during the modulation process, and outputs a signal that represents the SIR to TPC command generator (TPC-GEN) 107.

TPC command generator 107, provided in the same number as the communication terminal apparatuses engaged in wireless communication, generates an UL (Up Link)-TPC command that instructs to increase or decrease transmission power on the uplink channel according to the relationship between the received SIR of the uplink channel and the target SIR in terms of scale.

Scheduler 151 is a characteristic feature of the present invention which determines the communication terminal apparatus to transmit packets to (hereinafter "transmission destination apparatus") based on the CQI signals and the packet transmission control signals from the communication terminal apparatuses and outputs information representing the transmission destination apparatus and the transmitting packet data to buffer (Queue) 152. Scheduler 151 determines the modulation scheme and the coding rate based on the CQI signal from the transmission destination apparatus, and gives instructions to modulator (MOD) 153. Furthermore, scheduler 151 determines the transmission power of the packet data based on the ACK/NACK signal and CQI signal from the transmission destination apparatus, and outputs a signal representing the transmission power to transmission power controller (POWER-CON) 154. In addition, scheduler 151 outputs a signal (hereinafter "HS-SCCH signal") to be transmitted to the transmission destination apparatus through the HS-SCCH to amplifier 161. The HS-SCCH signal contains information (TFRI) that represents the timing to transmit the packet data, and the coding rate and modulation scheme for the packet data, and so on. Incidentally, the internal configuration of scheduler 151 will be described later in detail.

Buffer 152 outputs the packet data for the transmission destination apparatus specified by scheduler 151 to modulator 153.

Modulator 153 performs the error correction coding, modulation, and despreading of the packet data in accordance with instructions from scheduler 151, and outputs the result to amplifier 155.

Transmission power controller 154 controls the amplification level in amplifier 155 and thereby controls the transmission power of the output signal of modulator 153 to be the level determined by scheduler 151. The output signal of amplifier 155 is a signal to be transmitted by the HS-PDSCH and is output to multiplexer (MUX) 165.

Multiplexer (MUX) 156, provided in the same number as the communication terminal apparatuses engaged in wireless communication, multiplexes the dedicated data (including the control signal) to be transmitted to the communication terminal apparatuses with a pilot signal and a UL-TPC command and outputs the result to modulator (MOD) 157.

Modulator 157, provided in the same number as the communication terminal apparatuses engaged in wireless communication, performs the error correction coding, modulation, and spreading of the output signal of multiplexer 156 and outputs the result to amplifier 159.

Transmission power controller 158, provided in the same number as the communication terminal apparatuses engaged in wireless communication, controls the amplification level in amplifier 159 in accordance with the DL-TPC command, and thereby controls the transmission power of the output signal of modulator 157. In addition, transmission power controller 158 outputs a signal representing the transmission power level to transmission power controller (POWER-CON) 160. The signal amplified in amplifier 159 is a signal to be transmitted by the DPCH (including the A-DPCH) and is output to multiplexer 165.

Transmission power controller 160 controls the amplification level in amplifier 161 with the value of the transmission power level in transmission power controller 158 with an addition of an offset, and thereby controls the transmission power of the HS-SCCH signal output from scheduler 151. The signal amplified in amplifier 161 is a signal to be transmitted by the HS-SCCH, and is output to multiplexer 165. Transmission power controller 160 can correct the offset level according to the retransmission condition and the like.

Modulator (MOD) 162 performs the error correction coding, modulation, and spreading of the shared control data, and outputs the result to amplifier 164. Transmission power controller (POWER-CON) 163 controls the amplification level in amplifier 164 and thereby controls the transmission power of the output signal from modulator 162. The output signal of amplifier 164 is a signal to be transmitted by the CPICH and is output to multiplexer 165.

Multiplexer 165 multiplexes the output signals of amplifier 155, amplifier 159, amplifier 161 and amplifier 164, and outputs the result to RF transmitter 166.

RF transmitter 166 converts the baseband digital signal output form modulator 159 into a radio frequency signal and outputs the result to duplexer 102.

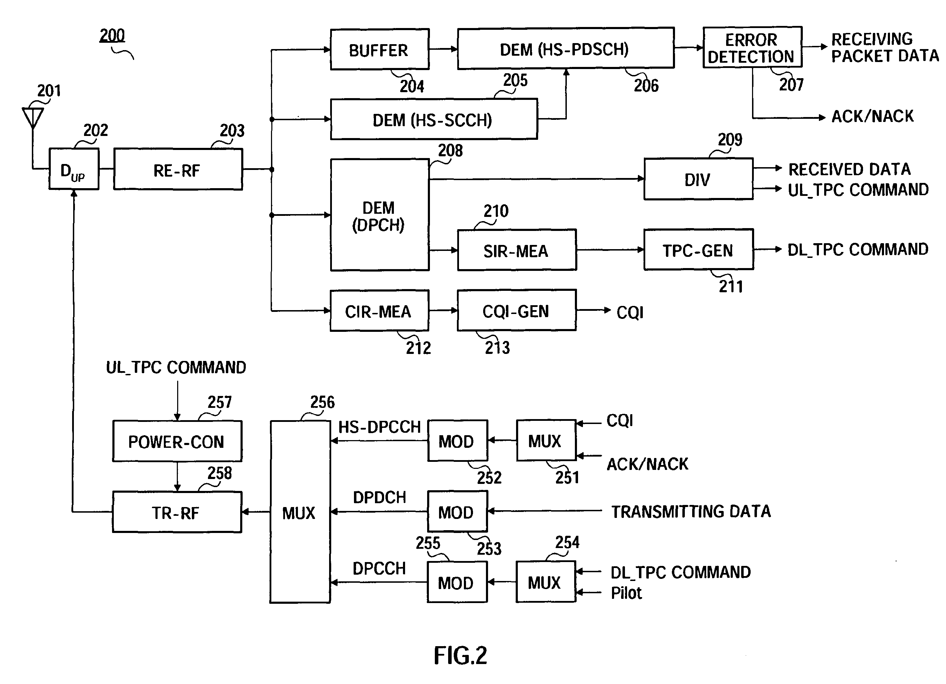

FIG.2 is a block diagram showing the configuration of a communication terminal apparatus that performs wireless communication with the base station apparatus shown in FIG.1. Communication terminal apparatus 200 of FIG.2 receives the dedicated data, shared control data, packet data, and HS-SCCH signal from base station apparatus 100. Now, the function of each component in base station apparatus 200 of FIG.2 will be explained below.

Duplexer 202 outputs a signal received by antenna 201 to RF receiver (RE-RF) 203. In addition, duplexer 202 transmits a signal output from RF transmitter (TR-RF) 258 by radio from antenna 201.

RF receiver 203 converts the received signal of radio frequency output from duplexer 202 into a baseband digital signal, outputs the HS-PDSCH signal to buffer 204, outputs the HS-SCCH signal to demodulator (DEM) 205, outputs the DPCH signal to demodulator (DEM) 208, and outputs the shared control channel signal to CIR (Carrier to Interference Ratio) measurer (CIR-MEA) 212.

Buffer 204 saves the HS-PDSCH signal on a temporary basis and outputs it to demodulator (DEM) 206.

Demodulator 205 performs demodulation processing upon the HS-SCCH signal, including despreading, RAKE combining, and error correction decoding, and acquires information necessary to demodulate the packet data including the arrival timing of the packet data for the local apparatus, and the coding rate and modulation scheme of the packet data, and outputs this information to demodulator 206.

Demodulator 206 performs demodulation processing upon the HS-PDSCH signal saved in the buffer based on the information acquired in demodulator 205 based on the information obtained by demodulator 205, including despreading, RAKE combining, and error correction decoding, and outputs the packet data obtained by the demodulation processing to error detector 207.

Error detector 207 performs the error detection of the packet data output from demodulator 206, and outputs an ACK signal when no error is detected and a NACK signal when no error is detected, to multiplexer (MUX) 251.

Demodulator 208 performs demodulation processing on the DPCH signal including despreading, RAKE combining, and error correction decoding, and outputs the result to divider 209 (DIV).

Divider 209 divides the output signal from demodulator 208 into the control signal and the data. The control signal separated in divider 209 includes a UL-TPC command. The UL-TPC command is output to transmission power controller (POWER-CON) 257.

SIR measurer (SIR-MEA) 210 measures received SIR of the downlink channels from the desired signal level and the interference signal level measured during the modulation process, and outputs all measured SIR's to TPC command generator (TPC-GEN) 211.

TPC command generator 211 generates a DL-TPC command according to the relationship between the received SIR output from SIR measurer 210 and the target SIR in terms of scale, and outputs it to multiplexer (MUX) 254.

CIR measurer 212 measures the CIR using the shared control channel signal from the base station apparatus, and outputs the measurement result to CQI generator (CQI-GEN) 213. CQI generator 213 generates and outputs to multiplexer 251 a CQI signal based on the CIR of the signal transmitted from the base station apparatus.

Multiplexer 251 multiplexes the CQI signal and the ACK/NACK signal, and outputs the result to modulator (MOD) 252.

Modulator 252 performs the error correction coding, modulation, and spreading of the output signal of multiplexer 251, and outputs the result to multiplexer (MUX) 256.

Modulator (MOD) 253 performs the error correction coding, modulation and spreading of the data to be transmitted to base station apparatus 100, and outputs the result to multiplexer 256.

Multiplexer 254 multiplexes the DL-TPC command and the pilot signal, and outputs the result to modulator 255 (MOD) . Modulator 255 performs the error correction coding, modulation and spreading of the output signal of multiplexer 254, and outputs the result to multiplexer 256.

Multiplexer 256 multiplexes the output signals from modulator 252, modulator 253, and modulator 255, and outputs the result to RF transmitter 258.

Transmission power controller 257 controls the amplification level in RF transmitter 258 in accordance with the UL-TPC command, and thereby controls the transmission power of the output signal of multiplexer 256. When a connection is established with a plurality of base station apparatuses, transmission power controller 257 performs control to increase transmission power only when all UL-TPC commands instruct to increase transmission power.

RF transmitter 258 amplifies the baseband digital signal output from multiplexer 256, and converts the result into a radio frequency signal and then outputs the result to duplexer 102.

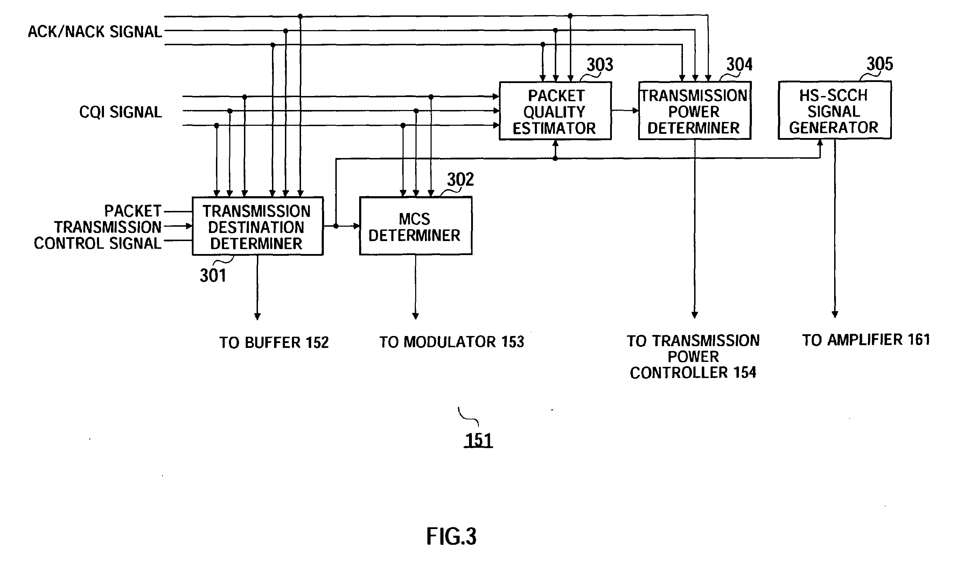

Next, the internal configuration of scheduler 151 of base station apparatus 100 will be described with reference to FIG.3.

Scheduler 151 consists chiefly of transmission destination determiner 301, MCS determiner 302, packet quality estimator 303, transmission power determiner 304, and HS-SCCH signal generator 305.

From the packet transmission control signal, transmission destination determiner 301 selects the communication terminals to be the candidates to transmit packets to, and determines the transmission destination apparatus based on the CQI signals from the communication terminals apparatuses. For example, based on the CQI signals, the communication terminal apparatus having the best receiving quality is selected for the transmission destination apparatus. Transmission destination determiner 301 outputs information that indicates the transmission destination apparatus to buffer 152, MCS determiner 302, packet quality estimator 303, and HS-SCCH signal generator 305. Transmission determiner 301 instructs buffer 152 to transmit new data when an ACK signal is input, and to retransmit the previously transmitted data when an NACK signal is received.

MCS determiner 302 performs MCS selection (i.e., modulation scheme and coding rate determination) based on the CQI signal of the transmission destination apparatus, and gives instructions to modulator 153.

Packet quality estimator 303 estimates the quality of the received packet at the transmission destination apparatus based on the CQI signal, and, based on the estimation result, calculates a request packet quality for achieving the target packet quality upon retransmission and outputs it to transmission power determiner 304.

Transmission power determiner 304 sets the transmission power at a predetermined level when an ACK signal is received from the transmission destination apparatus, and determines the transmission power in a way that satisfies the request packet quality when a NACK signal is received. Then, transmission power determiner 304 outputs a signal that represents the determined transmission power to transmission power controller 154.

HS-SCCH signal generator 305 generates an HS-SCCH signal for the transmission destination apparatus, and outputs the signal to amplifier 161.

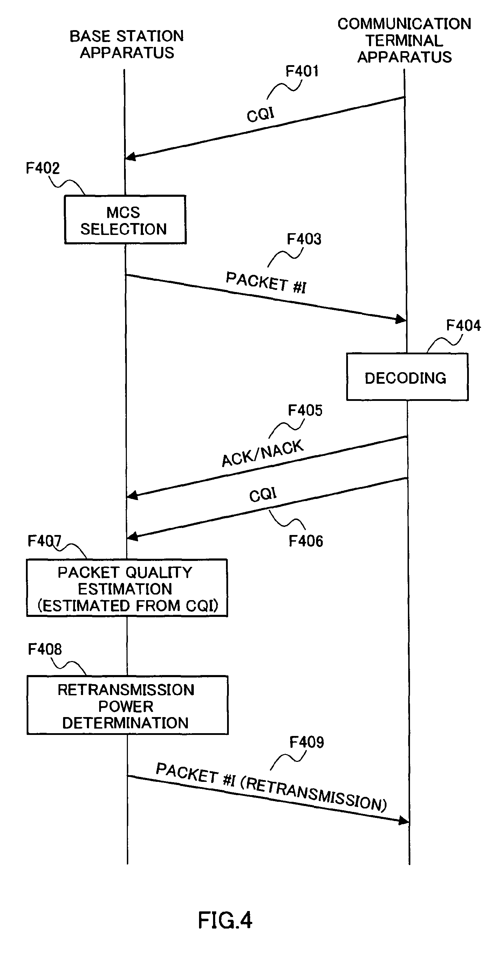

Next, the steps in communication between the base station apparatus and the communication terminal apparatus of the present invention will be descried with reference to the sequence diagram of FIG.4.

First, the base station apparatus receives the downlink channel condition report value (i.e. CQI signal) , transmitted from the communication terminal apparatus on a regular basis (F401), and performs MCS selection (i.e., modulation scheme and coding scheme selection) (F402). Next, adopting the MCS selected, the base station apparatus transmits packet #i (where i is a natural number) (F403) .

The communication terminal apparatus decodes received packet #i (F404), and transmits an ACK signal when detecting no error or a NACK signal when detecting an error (F405). The communication terminal apparatus transmits a CQI signal to the base station apparatus (F406).

If the communication terminal apparatus receives a NACK signal in F404 above, the base station apparatus estimates the receiving quality of packet #i based on the CQI signal corresponding to the time the communication terminal apparatus received packet #i, and furthermore estimates the request packet quality (F407) . Then, the base station apparatus determines the transmission power for retransmission based on the request packet quality (F408), and retransmits packet #i (F409).

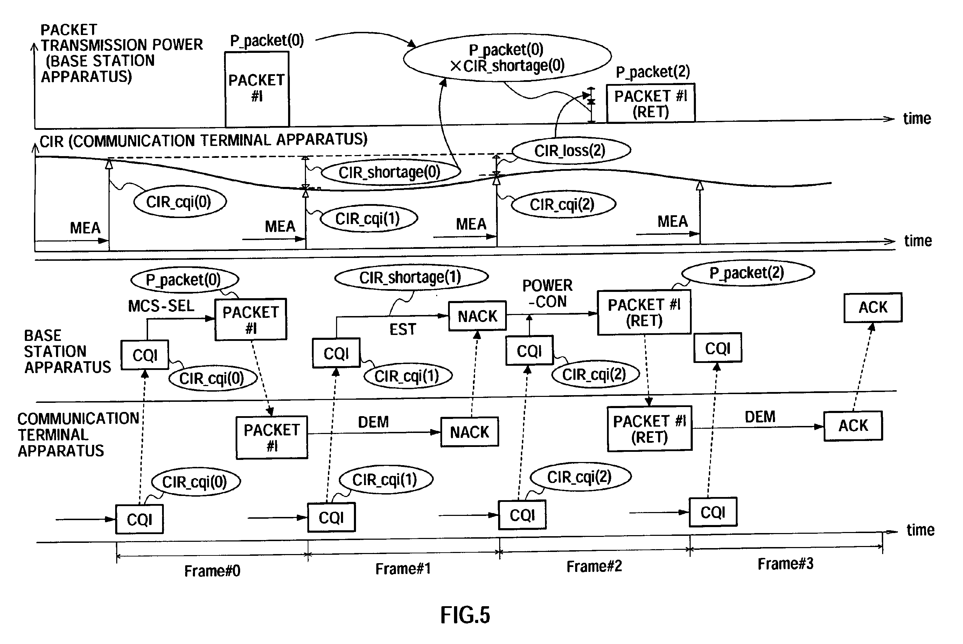

Next, the details of the operations of the base station apparatus and communication terminal apparatus of the present invention will be described with reference to FIG.5 and mathematical formulas.

In the following descriptions, the communication terminal apparatus is assumed to transmit a CQI signal on a per frame basis.

In addition, the base station apparatus transmits a packet per every two frames, and the communication terminal apparatus transmits an ACK/NACK signal per every two frames, and the packet transmission from the base station apparatus and the ACK/NACK signal transmission from the communication terminal apparatus are performed in alternate frames.

In addition, the CIR will be used as an indicator of downlink channel condition. In H-ARQ, the base station apparatus transmits packets using the same MCS, both upon the initial transmission and upon retransmission alike. The combining method at the communication terminal apparatus employs a Chase Combining scheme, whereby receiving quality is determined from the sum of the true values of CIR.

Incidentally, CIR_cqi (k) is the true CIR value in the CQI signal transmitted in frame #k, and P_packet (k) is the transmission power of the packet transmitted in frame #k.

[Frame #0]

The communication terminal apparatus transmits CIR_cqi (0) in a CQI signal. The base station apparatus performs MCS selection from received CIR_cqi (0), and transmits packet #i at power P_packet (0). The communication terminal apparatus receives packet #i and performs channel condition measurement (MEA) for the CQI signal to transmit in frame #1.

[Frame #1]

The communication terminal apparatus performs the decoding (DEM) of received packet #i. As a result, if there is an error in the decoding result, a NACK signal will be transmitted. In addition, the communication terminal apparatus transmits CIR_cqi (1) measured in previous frame #0 in a CQI signal. The base station apparatus estimates the packet quality from CIR_cqi (1) (EST), which indicates the channel quality upon receipt of packet #i at the communication terminal apparatus.

Here, given the assumption that the transmission power of the pilot channel and the initial transmission power of the packet are equal, packet quality CIR_packet (0) can be determined according to formula (1) below:

$$CIR\_packet(0) = CIR\_cqi(1) \tag{1}$$

Next, the base station apparatus determines the request packet quality.

First, target packet quality CIR_target (0) can be determined according to formula (2) below:

$$CIR\_target(0) = CIR\_cqi(0) \tag{2}$$

Here the request packet quality upon retransmission can be thought of as the shortage of the packets upon receipt of frame #0 at the communication terminal apparatus, so that request packet quality (= shortage) CIR_shortage can be determined according to formula (3) below:

$$CIR\_shortage(0) = CIR\_target(0) - CIR\_packet(0)$$
$$= CIR\_cqi(0) - CIR\_cqi(1) \quad \dots (3)$$

After that, the base station apparatus recognizes the need for retransmission of packet #i by a NACK signal.

[Frame #2]

The base station apparatus receives a CQI signal and learns the channel condition as indicated by CIR_cqi (2) .

Then, loss difference CIR_loss (2) between the channel condition at the time of frame #0 and the channel condition of frame #2 is calculated according to formula (4) below.

$$CIR\_loss~(2) = CIR\_cqi(0)/CIR\_cqi(2) \tag{4}$$

Next, the base station apparatus determines retransmission power P_packet (2) (POWER-CON). The required retransmission power has to take into account the shortage of power upon the initial reception at the communication terminal apparatus and the present channel loss, and can be calculated according to formula (5) below:

$$P\_packet(2) = \{P\_packet(0) \ *$$
$$CIR\_shortage(0)/CIR\_target(0)\} \ * \ CIR\_loss(2)$$
$$= P\_packet(0) \ * \ \{CIR\_cqi(0) -$$
$$CIR\_cqi(1)\}/CIR\_cqi(0) \ * \ \{CIR\_cqi(0)/CIR\_cqi(2)\}$$
$$= P\_packet(0) \ * \ \{CIR\_cqi(0) -$$
$$CIR\_cqi(1)\}/CIR\_cqi(2) \quad \dots (5)$$

Thus, according to the present embodiment, the communication terminal apparatus is able to estimate the receiving quality of a packet based on the downlink channel condition report value corresponding to the time the communication terminal apparatus received the packet, so that the base station apparatus is able to estimate the receiving quality of the packet at the communication terminal apparatus without having the communication terminal apparatus transmit packet quality information. In addition, the transmission power that is necessary upon retransmission can be determined based on the receiving quality of the packet, so that the transmission power upon retransmission of the packet can be suppressed to a minimum necessary level that will not cause error.

Scheduler 151 suppresses the noise component by averaging the CQI signals, thereby improving the reliability of the CQI signals.

Scheduler 151 also performs prediction from the CQI signals received earlier and is thereby able to receive a packet and at the same time estimate the quality of the packet without a CQI signal to measure.

(Embodiment 2)

When the transmission power of a packet transmission channel (e.g., HS-PDSCH) isdifferentfromthatofashared control channel, it would be effective to add an offset to the target packet quality.

Embodiment 2 will describe a case where an offset is added to the target packet quality.

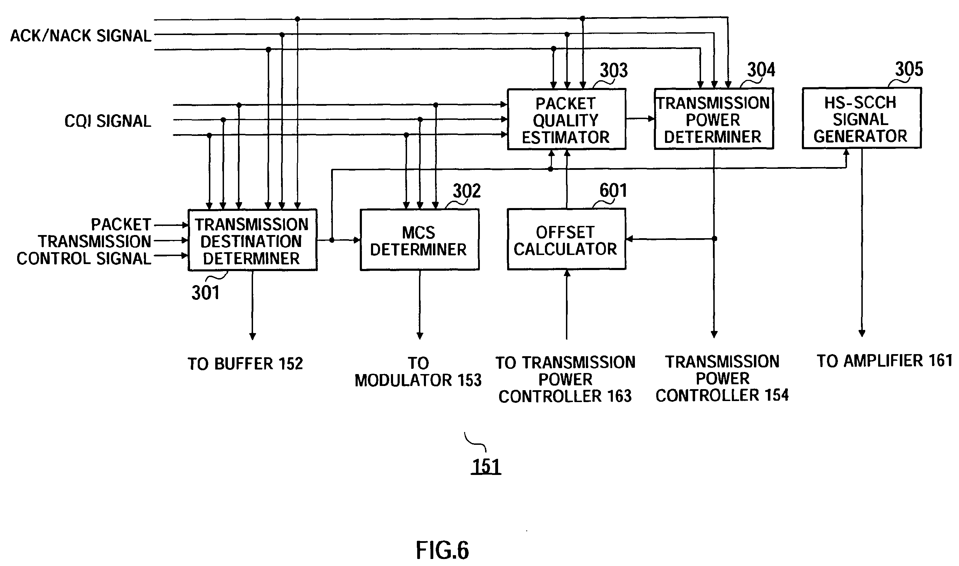

FIG.6 is a block diagram showing the inner configuration of a scheduler in the base station apparatus according to the present embodiment, which, in comparison with FIG.3, has offset calculator 601 in addition.

Offset calculator 601 receives as an input transmission power for the shared control channel from transmission power controller 163 as an input, calculates an offset from the transmission power difference between the packet transmission channel and the shared control channel, and outputs the offset to packet quality estimator 303.

Packet quality estimator 303, when receiving a NACK signal from the transmission destination apparatus, estimates the quality of the received packet based on a CQI signal, and calculates a request packet quality with an addition of the offset.

A detailed explanation will be given below using mathematical formulas.

Assume that the packet transmission power in frame #0 is P_packet (0) and the transmission power of the shared control channel is P_pilot, the offset (0) for the packet in frame #0 and the shared control channel can be calculated according to formula (6) below, and packet quality CIR_packet (0) can be calculated according to formula (7) below:

$$\text{Offset(0) = P\_packet(0)/P\_pilot} \tag{6}$$

$$\text{CIR\_packet(0) = CIR\_cqi(1) * Offset (0)} \tag{7}$$

Therefore, target packet quality CIR_target (0) can be calculated according to formula (8) below, and request packet quality CIR_shortage (0) can be calculated according to formula (9) below:

$$\text{CIR\_target (0) = CIR\_cqi (0) * Offset (0)} \tag{8}$$

$$\text{CIR\_shortage(0) = CIR\_target(0) - CIR\_packet(0)}$$
$$\text{= \{CIR\_cqi(0) - CIR\_cqi(1)\} * Offset(0)}$$
$$\text{... (9)}$$

Thus, according to this embodiment, by adding an offset, even when there is a transmission power difference between the shared control channel and the packet transmission channel, based on the receiving quality of the packet, it is possible to determine transmission power required upon retransmission and suppress the transmission power of the packet upon retransmission at a minimum required level that will not cause error.

(Embodiment 3)

Embodiment 3 will describe a case where a scheme called incremental redundancy is employed, whereby, when the priority of the systematic bits and the parity bits in turbo code, or the parity bit to transmit is switched between the times of initial transmission and retransmission, a coding bit to be transmitted is determined based on receiving packet quality.

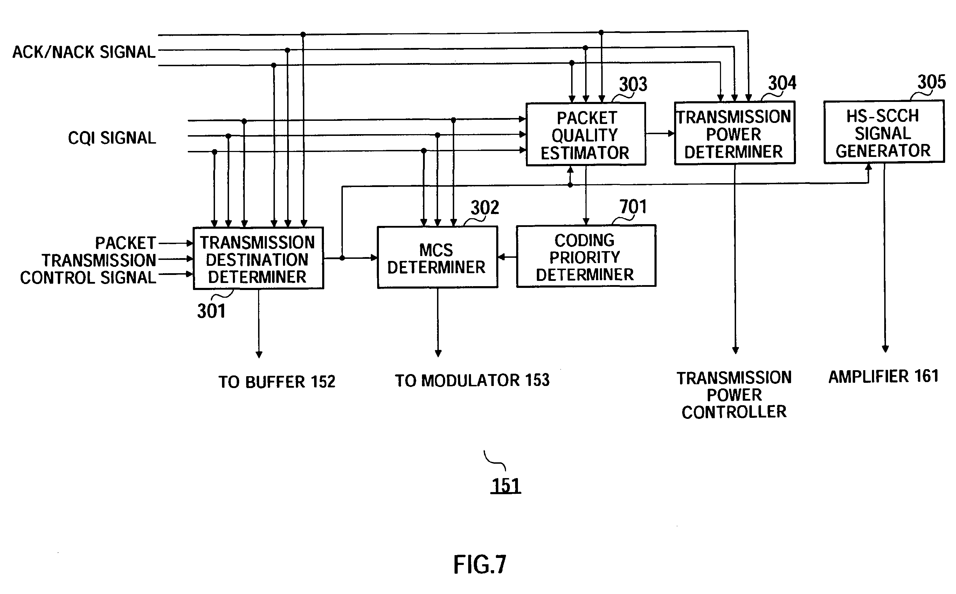

FIG.7 is a block diagram showing the inner configuration of a scheduler in a base station apparatus according to this embodiment, which, in comparison with FIG.3, has coding priority determiner 701 in addition.

Coding priority determiner 701 instructs MCS determiner 302 as to which of the systematic bits and parity bits in turbo code to be prioritized and transmitted.

The following are two possible coding priority determination methods.

(1) When the systematic bits are received in desirable quality, the parity bits will be retransmitted with priority. By thus prioritizing the parity bits, it is possible to lower the coding rate and improve the coding gain.

(2) When the systematic bits are not received in desirable quality, the systematic bits will be retransmitted with priority. By thus prioritizing the systematic bits, it is possible to improve the quality of the systematic bits and reduce decoding errors.

By thus determining the coding bits to be transmitted based on receiving packet quality, it is possible to improve coding gain and improve decoding quality at the communication terminal apparatus.

Thus, the above description has made clear that according to the present invention it is possible to estimate receiving quality of a packet based on a downlink channel condition report value corresponding to the time the communication terminal apparatus received the packet, so that the base station apparatus is able to estimate the receiving quality of the packet without having the communication terminal apparatus transmit packet quality information. In addition, the minimum transmission power required for retransmission can be determined based on the receiving quality of the packet, so that the transmission power upon retransmission of the packet can be suppressed to a minimum necessary level that will not cause error.

The present application is based on Japanese Patent Application No.2002-274746, filed on September 20, 2002, entire content of which is incorporated herein by reference.

Industrial Applicability

The present invention is suitable for use in a base station apparatus used in a radio communication system that performs high speed downlink packet communication.

**Claims**

1. A base station apparatus comprising:

   a transmission power controller that controls a transmission power of a packet;
   a receiver that receives a channel condition report value transmitted from a communication terminal apparatus of a transmission destination of the packet, said downlink channel condition value indicating a downlink channel condition; and
   a receiving quality estimator that estimates a receiving quality of the packet at the communication terminal apparatus based on the channel condition report value,

   wherein the receiving quality estimator calculates a request packet quality for achieving a target packet quality upon a retransmission based on an estimated receiving quality of the packet; and
   wherein the transmission power controller sets the transmission power upon retransmission based on a calculated request packet quality.

2. The base station apparatus according to claim 1, further comprising an offset calculator that calculates an offset from a difference in transmission power between a packet transmission channel and a shared control channel,
   wherein the receiving quality estimator takes into account the offset in calculation of the request packet quality.

3. The base station apparatus according to claim 1, wherein the receiving quality estimator estimates the receiving quality of the packet based on an average value of a plurality of channel condition report values received earlier.

4. The base station apparatus according to claim 1, wherein the receiving quality estimator predicts and estimates the receiving quality of the packet from a plurality of channel condition report values received earlier.

5. The base station apparatus according to claim 1, further comprising a coding priority determiner that, when a method is employed that switches a priority of a systematic bit and a parity bit in a turbo code between times of initial transmission and retransmission, determines which of the systematic bit and the parity bit to be prioritized and transmitted based on the receiving quality of the packet estimated by the receiving quality estimator.

6. The base station apparatus according to claim 5, wherein the coding priority determiner retransmits the parity bit with priority when the systematic bit is received in a desirable quality.

7. The base station apparatus according to claim 5, wherein the coding priority determiner retransmits the systematic bit with priority when the systematic bit is not received at a desirable quality.

8. A transmission power control method comprising:

estimating a receiving quality of a packet based on a channel condition report value transmitted from an apparatus of a transmission destination of the packet, said downlink channel condition value indicating a downlink channel condition;
calculating a request packet quality for achieving a target packet quality upon retransmission based on an estimated receiving quality of the packet; and
setting a transmission power for retransmission of the packet based on the request packet quality.

FIG.1

FIG.2

EP 1 511 192 A1

ACK/NACK SIGNAL

CQI SIGNAL

PACKET TRANSMISSION CONTROL SIGNAL

| TRANSMISSION DESTINATION DETERMINER | 301 |
| MCS DETERMINER | 302 |
| PACKET QUALITY ESTIMATOR | 303 |
| TRANSMISSION POWER DETERMINER | 304 |
| HS-SCCH SIGNAL GENERATOR | 305 |

TO BUFFER 152

TO MODULATOR 153

TO TRANSMISSION POWER CONTROLLER 154

TO AMPLIFIER 161

151

FIG.3

EP 1 511 192 A1

BASE STATION
APPARATUS

COMMUNICATION
TERMINAL
APPARATUS

F401

CQI

F402

MCS
SELECTION

F403

PACKET #I

F404

DECODING

F405

ACK/NACK

CQI

F406

F407

PACKET QUALITY
ESTIMATION
(ESTIMATED FROM CQI)

F408

RETRANSMISSION
POWER
DETERMINATION

F409

PACKET #I (RETRANSMISSION)

FIG.4

FIG.5

FIG.6

305 HS-SCCH SIGNAL GENERATOR — TO AMPLIFIER 161

304 TRANSMISSION POWER DETERMINER — TRANSMISSION POWER CONTROLLER 154

303 PACKET QUALITY ESTIMATOR

601 OFFSET CALCULATOR — TO TRANSMISSION POWER CONTROLLER 163

302 MCS DETERMINER — TO MODULATOR 153

301 TRANSMISSION DESTINATION DETERMINER — TO BUFFER 152

ACK/NACK SIGNAL

CQI SIGNAL

PACKET TRANSMISSION CONTROL SIGNAL

151

FIG.7

151

- 305 HS-SCCH SIGNAL GENERATOR
- 304 TRANSMISSION POWER DETERMINER
- 303 PACKET QUALITY ESTIMATOR
- 701 CODING PRIORITY DETERMINER
- 302 MCS DETERMINER
- 301 TRANSMISSION DESTINATION DETERMINER

AMPLIFIER 161

TRANSMISSION POWER CONTROLLER

TO MODULATOR 153

TO BUFFER 152

ACK/NACK SIGNAL

CQI SIGNAL

PACKET TRANSMISSION CONTROL SIGNAL

## INTERNATIONAL SEARCH REPORT

| International application No. |
| --- |
| PCT/JP03/10332 |

**A. CLASSIFICATION OF SUBJECT MATTER**
Int.Cl⁷ H04B7/26

According to International Patent Classification (IPC) or to both national classification and IPC

**B. FIELDS SEARCHED**

Minimum documentation searched (classification system followed by classification symbols)
Int.Cl⁷ H04B7/24-7/26, H04Q7/00-7/38

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| E,X<br>E,A | JP 2003-264873 A (Matsushita Electric Industrial Co., Ltd.),<br>19 September, 2003 (19.09.03),<br>Column 6, line 9 to column 12, line 43<br>(Family: none) | 1-4,8<br>5-7 |
| A | JP 2002-9692 A (Matsushita Electric Industrial Co., Ltd.),<br>11 January, 2002 (11.01.02),<br>Column 7, line 8 to column 8, line 25<br>& WO 01/99328 A1     & AU 200174607 A<br>& EP 1207646 A1     & US 2002/0114404 A1<br>& KR 2002020971 A1     & CN 1381118 A | 1-8 |

☒ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 18 November, 2003 (18.11.03) | 09 December, 2003 (09.12.03) |

| Name and mailing address of the ISA/<br>Japanese Patent Office | Authorized officer |
| --- | --- |
| Facsimile No. | Telephone No. |

Form PCT/ISA/210 (second sheet) (July 1998)

**EP 1 511 192 A1**

**INTERNATIONAL SEARCH REPORT**

| International application No. |
|---|
| PCT/JP03/10332 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-119426 A (NTT Docomo Inc.),<br>27 April, 2001 (27.04.01),<br>Column 15, line 45 to column 16, line 23<br>(Family: none) | 5-7 |

Form PCT/ISA/210 (continuation of second sheet) (July 1998)